# EUROPÄISCHE PATENTSCHRIFT

(11) **EP 1 366 617 B1**
(45) Veröffentlichungstag und Bekanntmachung des Hinweises auf die Patenterteilung: **03.08.2005**
(21) Anmeldenummer: 02727190.7
(22) Anmeldetag: 06.03.2002
(51) Int. Cl.: H04M 3/40, H04M 1/60, H04M 1/19

(54) **VERFAHREN UND VORRICHTUNG ZUR VERBESSERUNG DER SPRACHQUALITÄT AUF TRANSPARENTEN TELEKOMMUNIKATIONS-ÜBERTRAGUNGSWEGEN**
METHOD AND DEVICE FOR IMPROVING VOICE QUALITY ON TRANSPARENT TELECOMMUNICATION-TRANSMISSION PATHS
PROCEDE ET DISPOSITIF POUR AMELIORER LA QUALITE DE LA VOIX SUR DES VOIES DE TRANSMISSION DE TELECOMMUNICATIONS TRANSPARENTES

(30) Priorität: 07.03.2001 DE 10110983; 27.07.2001 DE 10136491
(43) Veröffentlichungstag der Anmeldung: 03.12.2003
(73) Patentinhaber: T-Mobile Deutschland GmbH, 53227 Bonn (DE)
(72) Erfinder: KRUSE, Gerhard, 53578 Windhagen (DE)
(74) Vertreter: Riebling, Peter, Dr.-Ing.
(86) Internationale Anmeldenummer: PCT/DE2002/000790
(87) Internationale Veröffentlichungsnummer: WO 2002/071731

(56) Entgegenhaltungen:
- EP-A- 0 539 017
- EP-A- 0 705 016
- WO-A-97/32430
- DE-C- 19 852 091

## Beschreibung

Die Erfindung betrifft ein Verfahren und eine Vorrichtung zur Verbesserung der Sprachqualität auf transparenten Telekommunikations-Übertragungswegen nach den Oberbegriff der unabhängigen Patentansprüche.

Auf transparenten Sprach-Übertragungswegen, wie z.B. im Mobilfunk nach GSM- oder UMTS-Standard, wird das digitalisierte Sprachsignal ohne zusätzliches Radio Link Protocol (RLP) übertragen. Unter Radio Link Protocol versteht man ein neben dem eigentlichen Nutzsignal übertragenes Funkübertragungsstreckenprotokoll, das bei der Datenübertragung verwendet wird und für eine hohe Fehlerfreiheit der übertragenen Daten sorgt.

Die Sprachqualität wird bei transparenter Übertragung auf der Sprecherseite beeinflusst durch:
- Störungen, die außerhalb des Akustikspektrums des Sprechers, aber innerhalb der NF-Übertragungsbandbreite des Telekommunikationsgerätes auftreten, z.B. Umgebungsgeräusche.
- Sprechweise des Sprechers, z.B. undeutliches und/oder zu leises Sprechen, sowie die verwendete Sprache des Sprechers.

Zu lautes Sprechen wirkt sich in Grenzen nur wenig auf die Verständlichkeit aus, ist aber für den Hörer auf der Gegenseite unangenehm.

Aus dem Stand der Technik sind bereits Verfahren zur Verbesserung der Sprachqualität auf Telekommunikations-Übertragungswegen bekannt.

Gemäß der DE 198 52 091 C1 wird ein Entzerrer in den Audiopfad, vorzugsweise zwischen BSC und MSC geschaltet, der die Beeinflussung der Audioqualität durch die beteiligten Endgeräte kompensiert.

Die DE 198 52 805 A 1 lehrt ein Verfahren, bei dem die Signale von mindestens zwei Mikrofonen mit einem Sprachverarbeitungsalgorithmus verarbeitet werden, wobei durch Phasendrehung um 180° Hintergrund-Störgeräusche kompensiert werden.

Beide Verfahren haben einen erheblichen technische Aufwand im Endgerät bzw. in den Einrichtungen des Kommunikationsnetzes zur Folge.

Die Aufgabe der vorliegenden Erfindung besteht daher darin, ein Verfahren und eine Vorrichtung vorzuschlagen, um Umgebungsgeräusche außerhalb des Sprachspektrums zu unterdrücken und die Sprachqualität im Hinblick auf das Audio-Spektrum und die Lautstärke des Sprechers individuell zu verbessern.

Die Aufgabe wird mit dem Verfahren nach Anspruch 1 bzw. der Vorrichtung nach Anspruch 8 gelöst, indem der Audio-Übertragungskanal in vorgegebenen Zeitabständen an das jeweilige Audio-Spektrum des Sprechers angepasst wird. Hierfür sind Mittel zur Analyse des Sprachsignals in Bezug auf dessen Nutzbandbreite und Amplitude, sowie Mittel zur Beeinflussung der Bandbreite Δf und Amplitude v des Audio-Übertragungskanals in Abhängigkeit der ermittelten Nutzbandbreite und Amplitude vorgesehen.
Diese Mittel können sowohl in den Kommunikationsendgeräten als auch im Kommunikationsnetz selbst installiert sein.

Das Audio-Spektrum von Sprachsignalen wird im wesentlichen bestimmt durch die:
- Sprache: Deutliche Unterschiede ergeben sich zwischen vokal-reichen, z.B. romanischen Sprachen mit betonten Formanten, und vokal-armen Sprachen mit in der Regel höherer Bandbreite und mehr Dynamik in der Lautstärke, wie z.B. Arabisch.
- Stimmlage, z.B. Sopran oder Tenor, und Klangfarbe, d.h. die Ausprägung und das Spektrum der Formanten
- Aussprache, im wesentlichen charakterisierbar als klar oder undeutlich. Durch undeutliche Aussprache ("Nuscheln") werden Formanten gedämpft.

Gemäss einer bevorzugten Ausbildung der Erfindung wird das Sprachsignal zunächst in einem Analysator auf Nutzbandbreite Δf, Mittenfrequenz f₀ und Amplitude v analysiert.
Aus den ermittelten Parametern der Frequenz-/Amplitudenanalyse werden vorzugsweise in einem Mikroprozessor Steuersignale erzeugt, welche die Informationen des Sprachsignals über die Bandbreite Δf, Mittenfrequenz f₀ und die Amplitude v enthalten.

Gemäß der bevorzugten Ausbildung werden die Steuersignale über die ermittelte Mittenfrequenz f₀ und Bandbreite Δf des Sprachsignals zur Steuerung eines Bandpassfilters verwendet, dessen Übertragungscharakteristik in Abhängigkeit der ermittelten Parameter eingestellt wird.
Ferner wird das Steuersignal über die ermittelte Amplitude einem steuerbaren Verstärker zugeführt, dessen Verstärkung in Abhängigkeit der ermittelten Amplitude des Sprachsignals eingestellt wird. Damit eine optimale Sprachverständlichkeit erreicht wird, besitzt der Verstärker vorzugsweise eine logarithmische Übertragungscharakteristik.

Dadurch dass die Steuersignale vom Mikroprozessor in vorgegebenen zeitlichen Abständen τ neu generiert werden, ergibt sich eine quasikontinuierliche Anpassung des Audio-Übertragungskanals an das Sprachspektrum des Sprechers.

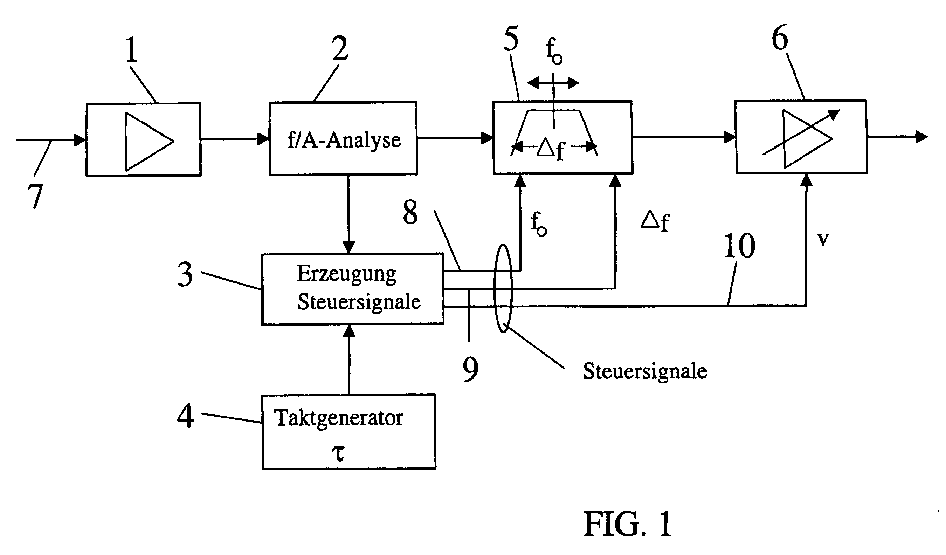

Nachfolgend wird die Erfindung anhand eines Ausführungsbeispiels mit Bezugnahme auf Zeichnungsfigur 1 näher beschrieben. Aus Figur 1 und ihrer Beschreibung ergeben sich weitere Merkmale, Vorteile und Anwendungsmöglichkeiten der Erfindung.

Die Vorrichtung wird vorzugsweise in einem Telekommunikationsendgerät zwischen dem Ausgang des Mikrofons, bzw. Vorverstärkers und der nachfolgenden Stufe (bei digitalen Mobiltelefonen dem Sprachkodierer) installiert. Grundsätzlich könnte sie aber auch im Kommunikationsnetz, z.B. in einem Netzknoten, installiert werden.

Das vom Mikrofon kommende Sprachsignal 7 (Eingangssignal) wird in einem ersten linearen Verstärker 1 auf einen Pegel derart verstärkt, dass das Signal in einer nächsten Stufe, einem Analysator 2, nach Frequenz und Amplitude analysiert werden kann. Im einzelnen wird im Analysator 2 die Signal-Bandbreite Δf, die Mittenfrequenz f₀ und die Amplitude v des Sprachsignals 7 ermittelt.

Aus den ermittelten Parametern der Frequenz-/Amplitudenanalyse werden in einer Steuereinheit, z.B. einem Mikroprozessor 3, drei Steuersignale 8-10 erzeugt, welche die Informationen des Sprachsignals über die Bandbreite Δf, Mittenfrequenz f₀ und Amplitude v enthalten.

Diese drei Steuersignale 8-10 werden vom Mikroprozessor 3 in vorgegebenen zeitlichen Abständen τ (z.B. τ = 5 sec ) neu generiert.
Durch einen Taktgenerator 4 mit der Periode τ erfolgt jeweils ein Reset des Mikroprozessors 3, welcher darauf die Steuersignale neu ermittelt. Die Taktdauer τ ist vorzugsweise einstellbar und kann auf den jeweiligen Sprecher optimiert werden.

Die Steuersignale 8, 9 über die ermittelte Mittenfrequenz f₀ und Bandbreite des Sprachsignals werden zur Steuerung eines Bandpassfilters 5 verwendet, dessen Übertragungscharakteristik in Abhängigkeit der ermittelten Parameter eingestellt wird.

Beispielsweise sei die nutzbare Übertragungsbandbreite des NF-Kanals eines Kommunikationsendgeräts 300 bis 3400 Hz.
Der Analysator ermittelt für einen bestimmten Sprecher jedoch eine tatsächliche Bandbreite des Sprachsignals von z.B. 350 bis 2550 Hz bei einer Mittenfrequenz f₀ von 1450 Hz. Das Bandpassfilter 5 wird auf diese ermittelten Werte eingestellt, wobei Störsignale, die sich außerhalb der eingestellten Eckfrequenzen von 350 Hz bzw. 2550 Hz befinden wirkungsvoll unterdrückt werden.

Mit Hilfe der erfindungsgemäßen Vorrichtung, insbesondere des adaptiven Bandpassfilters 5, dessen Mitten- und Eckfrequenzen vorzugsweise durch digitale Signale steuerbar sind, wird die NF-Übertragungscharakteristik in Intervallen τ quasi-kontinuierlich dem Audiospektrum des Sprachsignals, d.h. der Sprache, Tonlage und der Aussprache des jeweiligen Sprechers angepasst.

In einem steuerbaren Verstärker 6 mit vorzugsweise logarithmischer Kennlinie wird das Sprachsignal mit Hilfe der Information 10 über die Amplitude des Sprachsignals auf einen für die Verständlichkeit optimalen Pegel geregelt (im allgemeinen angehoben). Die logarithmische Kennlinie dieses Verstärkers 6 betont die Formanten eines Sprechers, wodurch, besonders bei undeutlicher Sprechweise und vokal-betonten Sprachen, die Sprachverständlichkeit auf der Hörerseite weiter verbessert wird.

### Zeichnungslegende

- 1: Verstärker
- 2: Analysator
- 3: Mikroprozessor
- 4: Taktgenerator
- 5: Bandpassfilter (steuerbar)
- 6: Verstärker (steuerbar)
- 7: Sprachsignal (Eingangssignal)
- 8: Steuersignal (Mittenfrequenz)
- 9: Steuersignal (Bandbreite)
- 10: Steuersignal (Amplitude)

## Patentansprüche

1. Verfahren zur Verbesserung der Sprachqualität auf transparenten Telekommunikations-Übertragungswegen,
**dadurch gekennzeichnet,**
**dass** der Audio-Übertragungskanal in vorgegebenen Zeitabständen an das jeweilige Sprach-Spektrum des Sprechers angepasst wird.

2. Verfahren nach Anspruch 1, **dadurch gekennzeichnet, dass** das Sprachsignal in einem Analysator (2) auf dessen Nutzbandbreite (Δf) Mittenfrequenz (f₀) und Amplitude (v) analysiert wird.

3. Verfahren nach einem der vorhergehenden Ansprüche, **dadurch gekennzeichnet, dass** aus den ermittelten Parametern der Frequenz/Amplitudenanalyse in einem Mikroprozessor (3) Steuersignale (8-10) erzeugt werden, welche die Informationen des Sprachsignals über die Bandbreite (Δf), Mittenfrequenz (f₀) und die Amplitude (v) enthalten

4. Verfahren nach einem der vorhergehenden Ansprüche, **dadurch gekennzeichnet, dass** die Steuersignale (8, 9) über die ermittelte Mittenfrequenz (f₀) und Bandbreite des Sprachsignals zur Steuerung eines Bandpassfilters (5) verwendet werden, dessen Übertragungscharakteristik in Abhängigkeit der ermittelten Parameter eingestellt wird.

5. Verfahren nach einem der vorhergehenden Ansprüche, **dadurch gekennzeichnet, dass** das Steuersignal (10) über die ermittelte Amplitude einem steuerbaren Verstärker (6) zugeführt wird, dessen Verstärkung in Abhängigkeit der ermittelten Amplitude des Sprachsignals eingestellt wird.

6. Verfahren nach Anspruch 5, **dadurch gekennzeichnet, dass** der Verstärker (6) eine logarithmische Übertragungscharakteristik besitzt.

7. Verfahren nach einem der vorhergehenden Ansprüche, **dadurch gekennzeichnet, dass** die Steuersignale (8-10) vom Mikroprozessor (3) in vorgegebenen zeitlichen Abständen (τ) neu generiert werden.

8. Vorrichtung zur Durchführung des Verfahrens nach einem der vorhergehenden Ansprüche,
**gekennzeichnet durch**:
Mittel (2) zur Analyse des Sprachsignals (7) in Bezug auf dessen Nutzbandbreite (Δf) und Amplitude (v);
Mittel (5; 6) zur Beeinflussung der Bandbreite (Δf) und Amplitude (v) des Audio-Übertragungskanals in Abhängigkeit der ermittelten Nutzbandbreite und Amplitude.

9. Vorrichtung nach Anspruch 8,
**gekennzeichnet durch**:
einen Analysator (2) der das Sprachsignal (7) auf dessen Bandbreite (Δf), Mittenfrequenz (f₀) und Amplitude (v) analysiert;
einen Mikroprozessor(3), welcher aus den analysieren Parametern Steuersignale (8-10) generiert;
einen Bandpassfilter (5), der in Abhängigkeit der ermittelte Bandbreite (Δf) und Mittenfrequenz (f₀) des Sprachsignals eingestellt wird;
einen Verstärker (6), dessen Verstärkung in Abhängigkeit der ermittelten Amplitude des Sprachsignals eingestellt wird.

10. Vorrichtung nach einem der Ansprüche 8 oder 9, **dadurch gekennzeichnet, dass** sie in einem Telekommunikationsendgerät zwischen dem Ausgang des Mikrofons bzw. Vorverstärkers und der nachfolgenden Stufe installiert ist.

11. Vorrichtung nach einem der Ansprüche 8 oder 9, **dadurch gekennzeichnet, dass** sie im Telekommunikationsnetz installiert ist.

## Claims

1. Method for improving speech quality on transparent telecommunications transmission routes, **characterised in that** the audio transmission channel is adapted at specified intervals of time to the speech spectrum in question of the speaker.

2. Method according to claim 1, **characterised in that** the speech signal is analysed in an analyser (2) with regard to its effective bandwidth (Δf), centre frequency (f₀) and amplitude (v).

3. Method according to one of the preceding claims, **characterised in that** from the parameters determined in the frequency/amplitude analysis control signals (8-10) are generated in a microprocessor (3) which signals contain the information in the speech signal about the bandwidth (Δf), centre frequency (f₀) and the amplitude (v).

4. Method according to one of the preceding claims, **characterised in that** the control signals (8, 9) about the centre frequency (f₀) and the bandwidth determined in the speech signal is used for controlling a bandpass filter (5) whose transmission characteristic is adjusted as a function of the parameters determined.

5. Method according to one of the preceding claims, **characterised in that** the control signal (10) about the amplitude determined is fed to a controllable amplifier (6) whose amplification is adjusted as a function of the amplitude determined in the speech signal.

6. Method according to claim 5, **characterised in that** the amplifier (6) has a logarithmic transmission characteristic.

7. Method according to one of the preceding claims, **characterised in that** the control signals (8-10) are generated afresh by the microprocessor (3) at predetermined intervals of time (τ).

8. Device for carrying out the method according to one of the preceding claims, **characterised by**:
means (2) for analysing the speech signal (7) with regard to its effective bandwidth (Δf) and amplitude (v); and
means (5; 6) for controlling the bandwidth (Δf) and amplitude (v) of the audio transmission channel as a function of the effective bandwidth and amplitude determined.

9. Device according to claim 8, **characterised by**:
an analyser (2) which analyses the speech signal (7) with regard to its bandwidth (Δf), centre frequency (f₀) and amplitude (v);
a microprocessor (3) which generates control signals (8-10) from the analysed parameters;
a bandpass filter (5) which is adjusted as a function of the bandwidth (Δf) and centre frequency (f₀) determined in the speech signal; and
an amplifier (6) whose amplification is adjusted as a function of the amplitude determined in the speech signal.

10. Device according to one of claims 8 or 9, **characterised in that** it is installed in a telecommunications terminal device between the output of the microphone or preamplifier and the succeeding stage.

11. Device according to one of claims 8 or 9, **characterised in that** it is installed in the telecommunications network.

## Revendications

1. Procédé pour améliorer la qualité vocale sur des lignes de télécommunication transparentes, **caractérisé en ce que** le canal de transmission audio est adapté suivant des intervalles de temps prédéfinis au spectre vocal du locuteur.

2. Procédé selon la revendication 1, **caractérisé en ce que** la largeur de bande utile (Δf), la fréquence centrale (f₀) et l'amplitude (v) du signal vocal sont analysées dans un analyseur (2).

3. Procédé selon l'une des revendications précédentes, **caractérisé en ce que** l'on produit dans un microprocesseur (3), à partir des paramètres de l'analyse de fréquence/d'amplitude déterminés, des signaux de commande (8-10) qui contiennent les informations du signal vocal portant sur la largeur de bande (Δf), la fréquence centrale (f₀) et l'amplitude (v).

4. Procédé selon l'une des revendications précédentes, **caractérisé en ce que** les signaux de commande (8, 9) portant sur la fréquence centrale (f₀) et la largeur de bande déterminées du signal vocal sont utilisés pour commander un filtre passe-bas (5) dont la caractéristique de transmission est réglée en fonction des paramètres déterminés.

5. Procédé selon l'une des revendications précédentes, **caractérisé en ce que** le signal de commande (10) portant sur l'amplitude déterminée est transmis à un amplificateur apte à être commandé (6) dont l'amplification est réglée en fonction de l'amplitude déterminée du signal vocal.

6. Procédé selon la revendication 5, **caractérisé en ce que** l'amplificateur (6) a une caractéristique de transmission logarithmique.

7. Procédé selon l'une des revendications précédentes, **caractérisé en ce que** les signaux de commande (8-10) sont à nouveau produits par le microprocesseur (3) suivant des intervalles de temps (τ) prédéfinis.

8. Dispositif pour la mise en oeuvre du procédé selon l'une des revendications précédentes, **caractérisé par** :
- des moyens (2) pour analyser la largeur de bande utile (Δf) et l'amplitude (v) du signal vocal (7) ;
- des moyens (5 ; 6) pour influer sur la largeur de bande (Δf) et l'amplitude (v) du canal de transmission audio en fonction de la largeur de bande utile et de l'amplitude déterminées.

9. Dispositif selon la revendication 8, **caractérisé par** :
- un analyseur (2) qui analyse la largeur de bande (Δf), la fréquence centrale (f₀) et l'amplitude (v) déterminées du signal vocal (7) ;
- un microprocesseur (3) qui produit des signaux (8-10) à partir des paramètres analysés ;
- un filtre passe-bas (5) qui est réglé en fonction de la largeur de bande (Δf) et de la fréquence centrale (f₀) déterminées du signal vocal ;
- un amplificateur (6) dont l'amplification est réglée en fonction de l'amplitude déterminée du signal vocal.

10. Dispositif selon la revendication 8 ou 9, **caractérisé en ce qu'**il est installé dans un terminal de télécommunication entre la sortie du microphone ou du préamplificateur et le niveau suivant.

11. Dispositif selon la revendication 8 ou 9, **caractérisé en ce qu'**il est installé dans le réseau de télécommunication.
